# EUROPÄISCHE PATENTSCHRIFT

(11) **EP 1 508 870 B1**
(45) Veröffentlichungstag und Bekanntmachung des Hinweises auf die Patenterteilung: **01.03.2006**
(21) Anmeldenummer: 04017048.2
(22) Anmeldetag: 20.07.2004
(51) Int. Cl.: G06K 7/00, G06K 7/08, H04L 25/49

(54) **Verfahren zur drahtlosen Datenübertragung zwischen einer Basisstation und einem Transponder**
Method for wireless data transmission between a base station and a transponder
Procédé pour le transfert des données sans fil entre une station de base et un transpondeur

(30) Priorität: 23.07.2003 DE 10335003
(43) Veröffentlichungstag der Anmeldung: 23.02.2005
(73) Patentinhaber: ATMEL Germany GmbH, 74072 Heilbronn (DE)
(72) Erfinder: Friedrich, Ulrich, 74248 Ellhofen (DE)

(56) Entgegenhaltungen:
- US-A- 4 837 779

## Beschreibung

Die Erfindung bezieht sich auf ein Verfahren zur drahtlosen Datenübertragung zwischen einer Basisstation und einem, insbesondere passiven, Transponder nach dem Oberbegriff des Anspruchs 1. Derartige Übertragungsverfahren zwischen einer oder mehreren Basisstationen bzw. Lesegeräten und einem oder mehreren Transpondem finden beispielsweise bei kontaktlosen Identifikationssystemen oder sogenannten Radio-Frequency-Identification(RFID)-Systemen Verwendung. Auf dem Transponder können auch Sensoren, beispielsweise zur Temperaturmessung, integriert sein. Derartige Transponder werden auch als Remote-Sensoren bezeichnet.

Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift Keying(ASK)-Unterträgermodulation, bei der die Frequenz oder die Phasenlage des Unterträgers geändert wird.

In der älteren deutschen Patentanmeldung 102 04 347 und der DE 101 38 217 A1 sind Verfahren zur drahtlosen Datenübertragung zwischen einer Basisstation und einem Transponder beschrieben, bei denen zu übertragende Datenpakete einen Kopfabschnitt, einen Datenabschnitt mit zu übertragenden Nutzdaten und einen Endabschnitt umfassen. Die zu übertragenden Nutzdaten werden mit Hilfe von Symbolen kodiert und übertragen, die sich im Kopfabschnitt des Datenpakets befinden. Ein Symbol dient hierbei zur Definition bzw. Interpretation des Wertes eines Zeichens. Ein derartiges Symbol wird üblicherweise mit Hilfe einer Zeitdauer zwischen zwei aufeinanderfolgenden Feldlücken, sogenannten "notches", im Kopfabschnitt dargestellt. Eine derartige Feldlücke kann bei einer Amplitudenmodulation beispielsweise durch Unterdrückung bzw. Dämpfung des Trägersignals oder bei einer Zweiseitenbandmodulation durch Umschalten der Phasenlage des Trägersignals erzeugt werden. Der Transponder dekodiert empfangene Datenpakete auf Basis der im Kopfabschnitt enthaltenen Symbole, bzw. anhand der den Symbolen zugeordneten Zeitdauern, indem er zur Bestimmung des Wertes eines Zeichens dessen Zeitdauer mit den Zeitdauern der Symbole vergleicht.

Durch die Wahl des Zeitintervalls bzw. der den Symbolen zugeordneten Zeitdauern ist es möglich, die Übertragungsrate in einem gewissen Bereich an die Übertragungsbedingungen anzupassen. Der Bereich der Übertragungsrate wird unter anderem dadurch begrenzt, dass der Transponder bzw. eine im Transponder hierfür zuständige Kodierungs-/Dekodierungseinheit unterschiedliche, zu den Symbolen bzw. Zeichen gehörige Zeitdauern zeitlich nicht mehr auflösen, d.h. nicht mehr unterscheiden kann. Eine höheres zeitliches Auflösungsvermögen geht in der Regel mit einem höheren Stromverbrauch des Transponders einher, da beispielsweise die Taktfrequenz eines zur Zeitdauembestimmung eingesetzten Zählers oder der Ladestrom einer funktional entsprechenden analogen RC-Stufe in der Kodierungs-/Dekodierungseinheit erhöht werden muss. Da im Fernfeld der von der Basisstation emittierten elektromagnetischen Wellen eine geringe Leistungsdichte vorherrscht, die zur Versorgung des Transponders dienen kann, sinkt die erzielbare Reichweite mit steigendem Stromverbrauch. Der die Kodierung bzw. Dekodierung bestimmende Parameter bzw. die Kodierungs-/Dekodierungseinheit wird folglich herkömmlicherweise statisch derart konfiguriert, dass sich ein ausreichender Kompromiss zwischen hohem zeitlichem Auflösungsvermögen und dadurch bedingter hoher erzielbarer Übertragungsrate einerseits und geringem Stromverbrauch andererseits ergibt.

Aufgrund von Prozesstoleranzen bei der Herstellung der Transponder sowie einer Temperaturabhängigkeit eines zur Datenübertragung verwendeten Oszillators, insbesondere wenn die Transponder ohne externe Bauelemente aufgebaut sind, ergibt sich eine breite Streuung ihrer Fähigkeit zur Bearbeitung von zu empfangenden und/oder zu sendenden Daten, insbesondere ihres zeitlichen Auflösungsvermögens von zu den Symbolen bzw. Zeichen gehörigen Zeitdauern. Um dieser Tatsache gerecht zu werden, muss eine Basisstation, wenn sie nicht über Informationen bezüglich der anzusprechenden Transponder verfügt, die Übertragungsbedingungen auf den sogenannten "worst case" einstellen.

Der Erfindung liegt als technisches Problem die Bereitstellung eines Verfahrens zur Datenübertragung der eingangs genannten Art zugrunde, das eine Datenübertragung zwischen der Basisstation und dem Transponder mit relativ großer Reichweite über einen weiten Übertragungsratenbereich hinweg bei optimiertem Leistungsbedarf ermöglicht und mit relativ geringem Aufwand realisierbar ist sowie eine Anpassung der Übertragungseigenschaften auf den jeweils anzusprechenden Transponder ermöglicht.

Die Erfindung löst dieses Problem durch die Bereitstellung eines Verfahrens mit den Merkmalen des Anspruchs 1.

Erfindungsgemäß überträgt der Transponder während der Übertragung des Kopfabschnitts Transponder-Betriebsinformationen, welche die Bearbeitung von zu empfangenden und/oder zu sendenden Daten durch den Transponder betreffen, durch Modulation und Rückstreuen der Trägerwelle an die Basisstation, die Basisstation empfängt die Transponder-Betriebsinformationen und stellt anhand dieser mindestens einen Übertragungsparameter ein. Unter Transponder-Betriebsinformationen im Sinne der Erfindung werden Informationen bezüglich der Bearbeitung bzw. der Bearbeitungs-Leistungsfähigkeit von zu empfangenden und/oder zu sendenden Daten durch den Transponder verstanden. Das Verfahren ermöglicht eine Anpassung der im Kopfabschnitt definierten Übertragungseigenschaften auf die spezifische Leistungsfähigkeit des angesprochenen Transponders, da der herkömmliche, nicht rückgekoppelte Steuerungsmechanismus, bei dem die im Kopfabschnitt definierten Übertragungseigenschaften unabhängig von der Leistungsfähigkeit des anzusprechenden Transponders eingestellt werden, durch einen rückgekoppelten und folglich geregelten Mechanismus ersetzt wird, bei dem der Kopfabschnitt bzw. einer oder mehrere Übertragungsparameter auf Basis der Transponder-Betriebsinformationen eingestellt werden.

In einer Weiterbildung des Verfahrens nach Anspruch 2 betreffen die Transponder-Betriebsinformationen das zeitliche Auflösungsvermögen des Transponders, insbesondere eine Oszillatorfrequenz oder einen oder mehrere Parameter einer analogen Zeitmesseinrichtung. Dies ermöglicht eine transponderselektive Einstellung derjenigen Übertragungsparameter durch die Basisstation, die vom zeitlichen Auflösungsvermögen des Transponders abhängen, beispielsweise der Übertragungsrate.

In einer Weiterbildung des Verfahrens nach Anspruch 3 stellen die Transponder-Betriebsinformationen eine minimale Zeitdauer zur Bearbeitung eines Zeichens durch den Transponder dar, das in dem mindestens einen weiteren Abschnitt enthalten ist. Dies ermöglicht der Basisstation eine gezielte Einstellung eines oder mehrerer Übertragungsparameter in Abhängigkeit von der Bearbeitungsleistungsfähigkeit des angesprochenen Transponders.

In einer Weiterbildung des Verfahrens nach Anspruch 4 definiert ein Übertragungsparameter eine Zeitdauer, die zur Kodierung und/oder Dekodierung der Wertigkeit eines Zeichen dient, das in dem mindestens einen weiteren Abschnitt enthalten ist. Dies ermöglicht der Basisstation eine gezielte Einstellung einer Zeichendauer in dem weiteren Abschnitt und folglich eine Einstellung der Datenübertragungsrate in Abhängigkeit von der Bearbeitungsleistungsfähigkeit des angesprochenen Transponders.

In einer Weiterbildung des Verfahrens nach Anspruch 5 enthält der Kopfabschnitt ein erstes Symbol, dessen Zeitdauer durch den Transponder ermittelt wird, wobei der Transponder in Abhängigkeit von der ermittelten Zeitdauer die zeitliche Auflösung der Kodierung und/oder der Dekodierung, insbesondere eine Oszillatorfrequenz oder einen oder mehrere Parameter einer analogen Zeitmesseinrichtung, einstellt. Vorteilhafterweise erzeugt der Transponder während des Sendens des ersten Symbols im Kopfabschnitt ein Rückstreusignal und die Basisstation ermittelt die Verzögerung zwischen dem Beginn des ersten Symbols und dem Rückstreusignal und stellt in Abhängigkeit von der ermittelten Verzögerung die Zeitdauer des ersten Symbols ein. Dies ermöglicht eine transponderselektive Einstellung der Oszillatorfrequenz oder der Parameter einer analogen Zeitmesseinrichtung durch die Basisstation, da die Basisstation aufgrund der ermittelten Verzögerung auf eine Oszillatorgrundfrequenz bzw. eine Grundeinstellung der analogen Zeitmesseinrichtung schließen kann. Die Oszillatorgrundfrequenz hängt beispielsweise stark von der Umgebungstemperatur und/oder von Prozesstoleranzen bei der Herstellung des entsprechenden Transponders ab.

In einer Weiterbildung des Verfahrens nach Anspruch 7 enthält der Kopfabschnitt mindestens ein zweites Symbol, dessen Zeitdauer die Datenübertragungsrate zwischen Basisstation und Transponder bestimmt, der Transponder erzeugt während des Sendens des zweiten Symbols ein weiteres Rückstreusignal und die Basisstation ermittelt die Verzögerung zwischen dem Beginn des zweiten Symbols und dem zweiten Rückstreusignal und stellt in Abhängigkeit von der ermittelten Verzögerung die Zeitdauer des zweiten Symbols ein. Auf diese Weise kann beispielsweise ein Umschalten der Oszillatorfrequenz durch die Basisstation erkannt werden. In Abhängigkeit von der detektierten Verzögerung kann dann beispielsweise die Übertragungsrate entsprechend eingestellt werden.

Vorteilhafte Ausführungsformen der Erfindung sind in den Zeichnungen dargestellt und werden nachfolgend beschrieben. Hierbei zeigen schematisch:
- Fig. 1: ein Diagramm eines Datenpaketes mit einem Kopfabschnitt, einem Datenabschnitt und einem Endabschnitt,
- Fig. 2: ein Zeitverlaufsdiagramm eines Kopfabschnitts eines Datenpakets und eines zugehörigen, von einem Transponder rückgestreuten Signals mit Transponder-Betriebsinformationen und
- Fig. 3: ein weiteres Zeitverlaufsdiagramm eines Kopfabschnitts eines Datenpakets und eines zugehörigen, von einem Transponder rückgestreuten Signals mit Transponder-Betriebsinformationen, wobei der Transponder seine Oszillatorfrequenz während der Übertragung des Kopfabschnitts verändert.

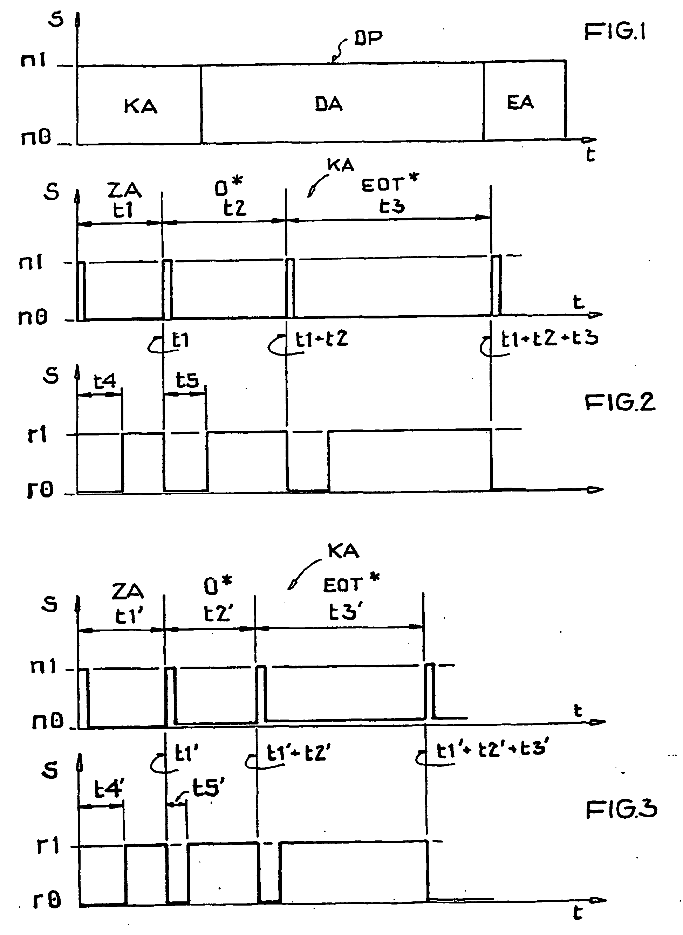

Fig. 1 zeigt ein schematisches Diagramm eines von einer Basisstation an einen Transponder übertragenen Datenpaketes DP mit einem Kopfabschnitt KA, an den sich ein Datenabschnitt DA mit zu übertragenden Nutzdaten und ein Endabschnitt EA anschließt.

Der obere Teil von Fig. 2 zeigt ein Diagramm des zeitlichen Verlaufs des Kopfabschnitts KA von Fig. 1 und der untere Teil von Fig. 2 ein zugehöriges, von dem Transponder rückgestreutes Signal mit Transponder-Betriebsinformationen. Auf der Y-Achse ist die jeweilige Signalstärke S aufgetragen, die bei den vom Transponder empfangenen Signalen zwischen Signalstärken n1 und n0 und bei den vom Transponder zurückgestreuten Signalen zwischen Signalstärken r1 und r0 alterniert. Im dargestellten Kopfabschnitt KA sind drei Symbole ZA, 0* und EOT* zur Einstellung von Übertragungsparametern enthalten. Hierzu wird auch auf die zeitgleich angemeldete Patentanmeldung EP-A-1 501 250 der Anmelderin verwiesen. Die Symbole ZA, 0* und EOT* werden durch aufeinanderfolgende Feldlücken oder sogenannte "notches" des von der Basisstation BS emittierten Trägersignals erzeugt, die in Fig. 2 als kurze Impulse dargestellt sind. Das erste Symbol ZA weist eine Dauer t1, das zweite Symbol 0* eine Dauer t2 und das dritte Symbol EOT* eine Dauer t3 auf, wobei die Zeitdauern t1 bis t3 durch eine Zeiterfassungseinheit im Transponder ermittelt werden. Wenn die Zeiterfassungseinheit als digitale Zählerschaltung realisiert ist, wird jeweils ein den Zeitdauern t1 bis t3 zugehöriger Zählerwert in einem zugeordneten Speicher abgelegt. Wenn die Zeiterfassungseinheit als RC-Schaltung realisiert ist, wird entsprechend ein erzielter Spannungswert in einem analogen Speicher abgelegt.

Das erste Symbol ZA bzw. dessen Zeitdauer t1 dient zur Einstellung der Taktfrequenz der Zählerschaltung, d.h. der Abtastfrequenz, bzw. des Ladestroms der RC-Schaltung im Transponder. Das Symbol 0* bzw. dessen zugehörige Zeitdauer t2 dient zur Kodierung bzw. Dekodierung der binären Zeichen "0" bzw. "1", aus denen zu übertragende Nutzdaten aufgebaut sind, die in einem weiteren Abschnitt des Datenpakets, dem sogenannten Datenabschnitt, enthalten sind. Das Zeichen EOT* dient zur Kennzeichnung des Endes eines Datenpakets und wird im Endabschnitt des Datenpakets übertragen, wozu beliebige, aus t3 abgeleitete Signalformen verwendet werden können. Ein binäres Zeichen im Datenabschnitt, dessen Zeitdauer kleiner als die zum Symbol 0* gehörige Zeitdauer t2 ist, wird im Transponder TR als eine "0" interpretiert. Ein Zeichen, dessen Zeitdauer größer als t2 und kleiner als die zum Zeichen EOT* gehörige Zeitdauer t3 ist, wird als eine "1" interpretiert. Ist der zeitliche Abstand zwischen zwei aufeinanderfolgenden Feldlücken größer als t3, erkennt der Transponder TR das Ende eines Datenpakets.

Nach einer Zeitdauer t4, bezogen auf die steigende Flanke der ersten Feldlücke, wechselt der Transponder den Modulationszustand des von ihm zurückgestreuten Signals. Die Zeitdauer t4 ist von der Oszillatorfrequenz der Zählerschaltung bzw. vom Ladestrom der RC-Schaltung des Transponders abhängig. Die Oszillatorfrequenz bzw. der Ladestrom ist wiederum stark von der Transponder-Temperatur und/oder von Herstellungstoleranzen des Transponders abhängig. Die Basisstation erhält folglich über die Zeitdauer t4 Transponder-Betriebsinformationen, welche die Bearbeitung von zu empfangenden und/oder zu sendenden Daten durch den Transponder betreffen, da die Zeitdauer t4 das zeitliche Auflösungsvermögen zu empfangender und/oder zu sendender Daten durch den Transponder widerspiegelt. Das zeitliche Auflösungsvermögen bestimmt unmittelbar die erzielbare Datenübertragungsrate, da bei hohem zeitlichem Auflösungsvermögen kurze Zeichenzeiten und kurze Zeitdifferenzen zwischen den unterschiedlichen Zeichen verwendbar sind.

Die Basisstation wertet die Zeitdauer t4 aus und stellt anhand dieser die Zeitdauer t1 des Symbols ZA ein. Zum Zeitpunkt t1 wechselt der Transponder den Modulationszustand des rückgestreuten Signals und stellt anhand t1 seine Oszillatorfrequenz bzw. den Ladestrom entsprechend ein, wobei diese bzw. dieser in Fig. 2 unverändert bleibt. Nach einer Zeitdauer t5 wechselt der Transponder seinen Modulationszustand erneut. Die Zeitdauer t5 zeigt der Basisstation an, mit welcher zeitlichen Auflösung bzw. welcher Zeitbasis der Transponder nach der Übertragung des ersten Symbols ZA weiterläuft. In Abhängigkeit von der Zeitdauer t5 wird die zum Symbol O* gehörige Zeitdauer t2, durch welche die Datenübertragungsrate bestimmt wird, durch die Basisstation eingestellt.

Der obere Teil von Fig. 3 zeigt ein weiteres Diagramm eines Kopfabschnitts KA und der untere Teil von Fig. 3 ein zugehöriges, von einem Transponder rückgestreutes Signal, wobei der Transponder seine Oszillatorfrequenz während der Übertragung des Kopfabschnitts verändert. Der Transponder wertet die- zum Symbol ZA' gehörige Zeitdauer t1' aus und erhöht daraufhin seine Oszillatorfrequenz bzw. den Ladestrom. Dies macht sich dadurch bemerkbar, dass eine Zeitdauer t5' zwischen steigender Flanke der zweiten Feldlücke und Modulationswechsel des rückgestreuten Signals im Vergleich zur Zeitdauer t5 von Fig. 2 abnimmt. Die Basisstation erkennt anhand dieser Information die Erhöhung der Abtastfrequenz im Transponder und stellt die zum Symbol 0*' gehörige Zeitdauer t2' entsprechend kleiner ein, wodurch sich die Datenübertragungsrate erhöht.

Wie das gezeigte und beschriebene Ausführungsbeispiel deutlich macht, ermöglicht das erfindungsgemäße Verfahren eine transponderselektive Einstellung von Übertragungsparametem, beispielsweise der Übertragungsrate, bereits zu Beginn der Übertragung des Kopfabschnitts. Somit können Umgebungsbedingungen, beispielsweise die Temperatur, und Prozessunsicherheiten bei der Transponderherstellung berücksichtigt werden. Eine Beschränkung der Übertragungsleistung auf Worst-Case-Bedingungen ist nicht mehr notwendig.

## Patentansprüche

1. Verfahren zur drahtlosen Datenübertragung zwischen einer Basisstation und einem, insbesondere passiven, Transponder, bei dem
- von der Basisstation elektromagnetische Trägerwellen emittiert werden,
- Daten von der Basisstation zum Transponder in Form von Datenpaketen (DP) übertragen werden, die auf die elektromagnetischen Trägerwellen aufmoduliert werden und einen Kopfabschnitt (KA) zur Einstellung von einem oder mehreren Übertragungsparametern und mindestens einen weiteren Abschnitt (DA, EA) umfassen, und
- Daten vom Transponder zur Basisstation durch Modulation und Rückstreuen der elektromagnetischen Trägerwellen übertragen werden,
**dadurch gekennzeichnet, dass**
- von dem Transponder während der Übertragung des Kopfabschnitts (KA) Transponder-Betriebsinformationen, welche die Bearbeitung von zu empfangenden und/oder zu sendenden Daten durch den Transponder betreffen, durch Modulation und Rückstreuen der Trägerwelle an die Basisstation übertragen werden und
- von der Basisstation die Transponder-Betriebsinformationen empfangen werden und anhand dieser der oder mindestens einer der Übertragungsparameter eingestellt wird.

2. Verfahren nach Anspruch 1, **dadurch gekennzeichnet, dass** die Transponder-Betriebsinformationen das zeitliche Auflösungsvermögen des Transponders, insbesondere eine Oszillatorfrequenz oder einen Parameter einer analogen Zeitmesseinrichtung, betreffen.

3. Verfahren nach Anspruch 1 oder 2, **dadurch gekennzeichnet, dass** die Transponder-Betriebsinformationen eine minimale Zeitdauer zur Bearbeitung eines Zeichens durch den Transponder darstellen, das in dem mindestens einen weiteren Abschnitt (DA) enthalten ist.

4. Verfahren nach einem der vorhergehenden Ansprüche, **dadurch gekennzeichnet, dass** der Übertragungsparameter oder einer der Übertragungsparameter eine Zeitdauer (t2, t2') definiert, die zur Kodierung und/oder Dekodierung der Wertigkeit eines Zeichen dient, das in dem mindestens einen weiteren Abschnitt (DA) enthalten ist.

5. Verfahren nach einem der vorhergehenden Ansprüche, **dadurch gekennzeichnet, dass** der Kopfabschnitt (KA) ein erstes Symbol (ZA, ZA') enthält, dessen Zeitdauer (t1, t1') durch den Transponder ermittelt wird, wobei der Transponder in Abhängigkeit von der ermittelten Zeitdauer (t1, t1') die zeitliche Auflösung der Kodierung und/oder der Dekodierung, insbesondere eine Oszillatorfrequenz oder einen Parameter einer analogen Zeitmesseinrichtung, einstellt.

6. Verfahren nach Anspruch 5, **dadurch gekennzeichnet, dass** der Transponder während des Sendens des ersten Symbols (ZA, ZA') im Kopfabschnitt (KA) ein Rückstreusignal erzeugt und die Basisstation die Verzögerung (t4, t4') zwischen dem Beginn des ersten Symbols und dem Rückstreusignal ermittelt und in Abhängigkeit von der ermittelten Verzögerung (t4, t4') die Zeitdauer (t1, t1') des ersten Symbols (ZA, ZA') einstellt.

7. Verfahren nach Anspruch 5 oder 6, **dadurch gekennzeichnet, dass** der Kopfabschnitt (KA) mindestens ein zweites Symbol (0*, 0*') enthält, dessen Zeitdauer (t2, t2') die Datenübertragungsrate zwischen Basisstation und Transponder bestimmt, der Transponder während des Sendens des zweiten Symbols (0*, 0*') ein weiteres Rückstreusignal erzeugt und die Basisstation die Verzögerung (t5, t5') zwischen dem Beginn des zweiten Symbols und dem zweiten Rückstreusignal ermittelt und in Abhängigkeit von der ermittelten Verzögerung (t5, t5') die Zeitdauer (t2, t2') des zweiten Symbols (0*, 0*') einstellt.

## Claims

1. Method for wireless data transmission between a base station and a, in particular passive, transponder, in which
- electromagnetic carrier waves are emitted by the base station,
- data from the base station are transmitted to the transponder in the form of data packets (DP), which are moduiated on the electromagnetic carrier waves and comprise a head section (KA) for setting one or more transmission parameters and at least one further section (DA, EA), and
- data are transmitted from the transponder to the base station by modulation and backscattering of the electromagnetic carrier waves,
**characterised in that**
- transponder operating information concerning the processing of data, which is to be received and/or transmitted, by the transponder are transmitted by the transponder, during the transmission of the head section (KA), to the base station by modulation and backscattering of the carrier wave and
- the transponder operating information is received by the base station and on the basis of this the transmission parameter or at least one of the transmission parameters is set.

2. Method according to claim 1, **characterised in that** the transponder operating information concerns the resolution capability of the transponder, particularly an oscillator frequency or a parameter of an analogous time measuring device.

3. Method according to claim 1 or 2, **characterised in that** the transponder operating information represents a minimum time duration for processing a character, which is contained in the at least one further section (DA), by the transponder.

4. Method according to one of the preceding claims, **characterised in that** the transmission parameter or one of the transmission parameters defines a time duration (t2, t2') which serves for coding and/or decoding the significance of a character contained in the at least one further section (DA).

5. Method according to one of the preceding claims, **characterised in that** the head section (KA) contains a first symbol (ZA, ZA'), the time duration (t1, t1') is determined by the transponder, wherein the transponder sets the time resolution of the coding and/or the decoding, particularly an oscillator frequency or a parameter of an analogous time measuring device, in dependence on the determined time duration (t1, t1').

6. Method according to claim 5, **characterised in that** the transponder during transmission of the first symbol (ZA, ZA') in the head section (KA) produces a backscatter signal and the base station determines the delay (t4, t4') between the start of the first symbol and the backscatter signal and sets the time duration (t1, t1') of the first symbol (ZA, ZA') in dependence on the determined delay (t4, t4').

7. Method according to claim 5 or 6, **characterised in that** the head section (KA) contains at least one second symbol (0*, 0*'), the time duration (t2, t2') of which determines the data transmission rate between base station and transponder, the transponder during transmission of the second symbol (0*, 0*') produces a further backscatter signal and the base station determines the delay (t5, t5') between the start of the second symbol and the second backscatter signal and sets the time duration (t2, t2') of the second symbol (0*, 0*') in dependence on the determined delay (t5, t5').

## Revendications

1. Procédé de transfert de données sans fil entre une station de base et un transpondeur, en particulier un transpondeur passif, dans lequel :
. on émet des ondes porteuses électromagnétiques à partir de la station de base,
. on transmet des données à partir de la station de base au transpondeur sous la forme de paquets de données (DP), qui sont modulées sur les ondes porteuses électromagnétiques et comprennent une en-tête (KA) pour le réglage d'un ou plusieurs paramètres de transmission et au moins un ou plusieurs segments supplémentaires (DA, EA), et
. on transmet des données du transpondeur à la station de base par modulation et rétrodiffusion des ondes porteuses électromagnétiques,
**caractérisé en ce que**
. l'on transmet, à partir du transpondeur par modulation et rétrodiffusion, des ondes porteuses vers la station de base, pendant la transmission de l'en-tête (KA), des informations relatives au fonctionnement du transpondeur qui concernent le traitement de données à recevoir ou à envoyer par le transpondeur, et **en ce que**
. la station de base reçoit les informations relatives au fonctionnement du transpondeur et que, sur la base de celles-ci, on règle le ou au moins un des paramètres de transfert.

2. Procédé selon la revendication 1, **caractérisé en ce que** les informations relatives au fonctionnement du transpondeur concernent le pouvoir de résolution temporel du transpondeur, en particulier une fréquence d'oscillateur ou un paramètre d'un dispositif de chronométrage analogique.

3. Procédé selon la revendication 1 ou 2, **caractérisé en ce que** les informations relatives au fonctionnement du transpondeur représentent une durée minimale pour le traitement, par le transpondeur, d'un signal contenu dans le au moins un segment supplémentaire (DA).

4. Procédé selon l'une quelconque des revendications précédentes, **caractérisé en ce que** le paramètre de transmission ou un des paramètres de transmission définit une durée (t2, t2'), qui sert au codage et/ou au décodage de la valence d'un signal contenu dans le au moins un segment supplémentaire (DA).

5. Procédé selon l'une quelconque des revendications précédentes, **caractérisé en ce que** l'en-tête (KA) contient un premier symbole (ZA, ZA'), dont la durée (t1, t1') est déterminée par le transpondeur, le transpondeur réglant, en fonction de la durée (t1, t1') déterminée, la résolution temporelle du codage et/ou du décodage, en particulier une fréquence d'oscillateur ou un paramètre d'un dispositif de chronométrage analogique.

6. Procédé selon la revendication 5, **caractérisé en ce que** durant l'émission du premier symbole (ZA, ZA'), le transpondeur génère dans l'en-tête (KA) un signal de rétrodiffusion et la station de base détermine le retard (t4, t4') entre le début du premier symbole et le signal de rétrodiffusion et règle la durée (t1, t1') du premier symbole (ZA, ZA') en fonction du retard (t4, t4') déterminé.

7. Procédé selon la revendication 5 ou 6, **caractérisé en ce que** l'en-tête (KA) contient au moins un deuxième symbole (0*,0*') dont la durée (t2, t2') détermine le taux de transmission de données entre la station de base et le transpondeur, **en ce que** le transpondeur génère, pendant l'émission du deuxième symbole (0*, 0*'), un signal de rétrodiffusion supplémentaire et **en ce que** la station de base détermine le retard (t5, t5') entre le début du deuxième symbole et le deuxième signal de rétrodiffusion et règle la durée (t2, t2') du deuxième symbole (0*, 0*') en fonction du retard (t5, t5') déterminé.
